# EUROPÄISCHE PATENTSCHRIFT

(11) **EP 0 847 897 B1**
(45) Veröffentlichungstag und Bekanntmachung des Hinweises auf die Patenterteilung: **21.05.2003**
(21) Anmeldenummer: 97121737.7
(22) Anmeldetag: 10.12.1997
(51) Int. Cl.: B60Q 3/02

(54) **Leseleuchte**
Reading light
Lampe de lecture

(30) Priorität: 14.12.1996 DE 19652096
(43) Veröffentlichungstag der Anmeldung: 17.06.1998
(73) Patentinhaber: Hella KG Hueck & Co., 59552 Lippstadt (DE)
(72) Erfinder: Decker, Detlef, 59558 Lippstadt (DE)

(56) Entgegenhaltungen:
- EP-A- 0 515 921
- EP-A- 0 633 424
- DE-A- 19 610 138
- US-A- 3 433 940
- DETLEF DECKER: "CELIS- Ein Konzept für die Pkw-Innenraumbeleuchtung mit Lichtleittechnik" ATZ AUTOMOBILTECHNISCHE ZEITSCHRIFT, Bd. 97, Nr. 7/8, Juli 1995 - August 1995, Seiten 480-483, XP000521276 STUTTGART

## Beschreibung

Die Erfindung betrifft eine Leseleuchte, insbesondere zum Einbau in einen Fahrzeughimmel, mit einem Lichtleiter, mit einem Umlenkprisma, mit einer Lichteintrittsfläche, mit einer Reflexionsfläche und mit einer Lichtaustrittsfläche, die mit einer nachgeordneten Linse verbunden ist.

Eine derartige Leuchte ist aus der EP-A 0 633 424 bekannt. Bei dieser Leuchte sind das Umlenkprisma und die dessen Lichtaustrittsfläche angeordnete Linse einteilig ausgebildet. Die US-A-3 433 940 zeigt eine Leuchte, bei der zwischen einer Lichtaustrittsfläche eines freien Endes eines Lichtleiters und einer Lichteintrittsfläche eines Umlenkprismas ein Lichtleitelement angeordnet ist, dessen Eintrittsfläche an der Lichtaustrittsfläche des Lichtleiters anliegt und dessen der Eintrittsfläche abgewandte Austrittsfläche mit der Lichteintrittsfläche des Umlenkprismas verbunden ist. Das Lichtleitelement und das Umlenkprisma sind als einteliges Umlenkelement ausgebildet.

Zur Beleuchtung eines Innenraumes eines Fahrzeuges sind zahlreiche Leuchten, die als Leseleuchten bevorzugt in den Fahrzeughimmel, d. h. in die Decke des Fahrzeuginnenraumes eingebaut werden, bekannt. Die bekannten Leseleuchten für Fahrzeuginnenräume weisen eine Glühlampe auf, die hinter einer Lichtscheibe montiert ist. Eine Integration dieser bekannten Leseleuchten in einen modernen, besonders flachen, aus Schaumstoff oder ähnlichem Material bestehenden Dachhimmel, der direkt auf die Karosserie aufgeklebt wird, ist praktisch nicht möglich, da bei den bekannten Leseleuchten bei entsprechender Verringerung ihrer Bautiefe durch die Glühlampe verursachte thermische Probleme auftreten, die sich auch nicht durch die Wahl von besonders hitzebeständigen Werkstoffen lösen lassen, da dies zu einer unzulässigen Erwärmung des umliegenden Dachhimmels führen würde.

Weiterhin ist aus der DE 43 25 115 A1 eine Beleuchtungseinrichtung zur Ausleuchtung einer planen Nutzfläche, die - von der Bautiefe abgesehen - als Leseleuchte verwendet werden könnte, bekannt. Bei dieser Beleuchtungseinrichtung wird Licht über einen Lichtleiter, z. B. einem Lichtleitstab oder einem Bündel von Lichtleitfasern, einem Umlenkelement zugeführt, um beispielsweise 90 Grad umgelenkt und auf die zu beleuchtende Fläche projiziert zu werden. Weiterhin ist aus der EP 0 633 424 A1 eine Anordnung von Lichtquelle, Faseroptik und verstellbarem Lichtkegel bekannt. Obwohl bei den bekannten Leuchten unter Verwendung von Lichtleitern praktisch keine thermischen Probleme auftreten, werden solche Leuchten wegen ihrer relativ großen Bautiefe bisher nicht zum Einbau in einen flachen Fahrzeughimmel eines Fahrzeuginnenraumes verwendet.

Aufgabe der vorliegenden Erfindung ist es daher, eine Leseleuchte geringer Bautiefe zu schaffen, die insbesondere zum Einbau in einen flachen Fahrzeughimmel geeignet ist.

Die Aufgabe wird erfindungsgemäß durch die Merkmale des Anspruchs 1 gelöst.

Durch die Verbindung von Lichtleitelement und Umlenkprisma mit Linse kann auf eine spezielle Halterung von Umlenkprisma und Linse verzichtet werden, so daß die Einbautiefe besonders gering gehalten werden kann. Lediglich das Lichtleitelement muß mit dem freien Ende des Lichtleiters verbunden werden. Lichtleitelement, Umlenkprisma und Linse bilden so eine kompakte Baugruppe von miteinander verbundenen Elementen. Während bei bekannten Leuchten in Lichtleittechnik das Licht zumindest zwischen der Lichtaustrittsfläche des Lichtleiters und der Lichteintrittsfläche des Umlenkprismas in Luft verläuft, so daß im projizierten Licht von der Lichtleiterstirnfläche verursachte Abschattungen entstehen, verläuft bei der vorliegenden Erfindung das Licht bis zur Linse im optisch dichteren Medium unter deutlich flacherem Winkel, so daß hier Abschattungen des projizierten Lichtes vermieden bzw. mindestens vermindert werden.

Die gesamte Leuchte besteht, von dem Lichtleiter abgesehen, aus einem einzigen Teil, das beispielsweise lediglich in den Fahrzeughimmel eingerastet werden muß.

Nach einer bevorzugten Ausführungsform der Erfindung ist die Reflexionsfläche des Umlenkprismas verspiegelt und gegenüber der optischen Achse des Lichtleiters um einen Neigungswinkel von 45 Grad geneigt, so daß das von dem Lichtleiter ausgehende Lichtbündel um 90 Grad abgelenkt wird. Die Linse ist als Fresnellinse ausgebildet, deren optische Achse mit der gespiegelten optischen Achse des Lichtleiters zusammenfällt. Der Neigungswinkel der Reflexionsfläche kann entsprechend dem Einbauort der Leseleuchte und der auszuleuchtenden Fläche gewählt werden. Durch die Verwendung einer Fresnellinse wird eine besonders günstige und gleichmäßige Streuung erzielt.

Nach einer weiteren bevorzugten Ausführungsform der Erfindung ist das einteilige Umlenkelement aus einem hochtransparenten Kunststoff ausgebildet.

Nach einer weiteren bevorzugten Ausführungform ist das Lichtleitelement als Querschnittswandler ausgebildet, der an seiner Eintrittsfläche einen der Lichtaustrittsfläche des Lichtleiters angepaßten runden Querschnitt und an seiner Austrittsfläche einen der Form der im Fahrzeuginnenraum auszuleuchten Fläche angepaßten rechteckigen Querschnitt aufweist. Zweckmäßigerweise ist die Fresnellinse quer zu ihrer optischen Achse ebenfalls rechteckig ausgebildet. Damit kann zugleich eine noch geringere Einbautiefe erreicht werden.

Durch eine entsprechende Wahl der Fresnellinse und ihrer Brennweite kann die genannte zu beleuchtende Fläche sowohl scharfkantig als auch mit weich auslaufenden Grenzen ausgeleuchtet werden.

Da außer der Bautiefe auch die sonstigen Abmessungen dieser Leseleuchte äußerst gering sind, ist die Unterbringung des Lichtaustrittskörpers an ergonomisch optimalen Positionen des Fahrzeuginnenraumes möglich. Durch den Einsatz der Lichtleittechnik kann durch die Auffächerung eines Lichtleiterbündels auch mit mehreren Lichtaustritten gearbeitet werden, die gemeinsam die zu beleuchtende Fläche ausleuchten, so daß sich deutliche Reduzierungen der Schatten (z. B. durch die Hand beim Schreiben) und eine besonders homogene Ausleuchtung ergeben.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Vorderansicht eines Fahrzeuginnenraumes im Ausschnitt mit einer Leseleuchte,
- Figur 2:: eine Seitenansicht einer Leseleuchte im Schnitt,
- Figur 3:: eine Seitenansicht einer Leseleuchte mit einem einteiligen Umlenkelement im Schnitt,
- Figur 4:: eine Untersicht unter die Leseleuchte von Figur 3 und
- Figur 5:: eine Untersicht unter eine Leseleuchte mit einem Querschnittswandler.

Eine Leseleuchte (1) besteht im wesentlichen aus einem Lichtleiter (2), einem Lichtleitelement (3), einem Umlenkprisma (4) und einer nachgeordneten Linse (5).

Der Lichtleiter (2) besteht aus einem Glasfaserbündel (6) zur Lichtübertragung, das an seinem einer nicht dargestellten Lichtquelle abgewandten freien Ende (7) eine Lichtleiterendhülse (8) aufweist.

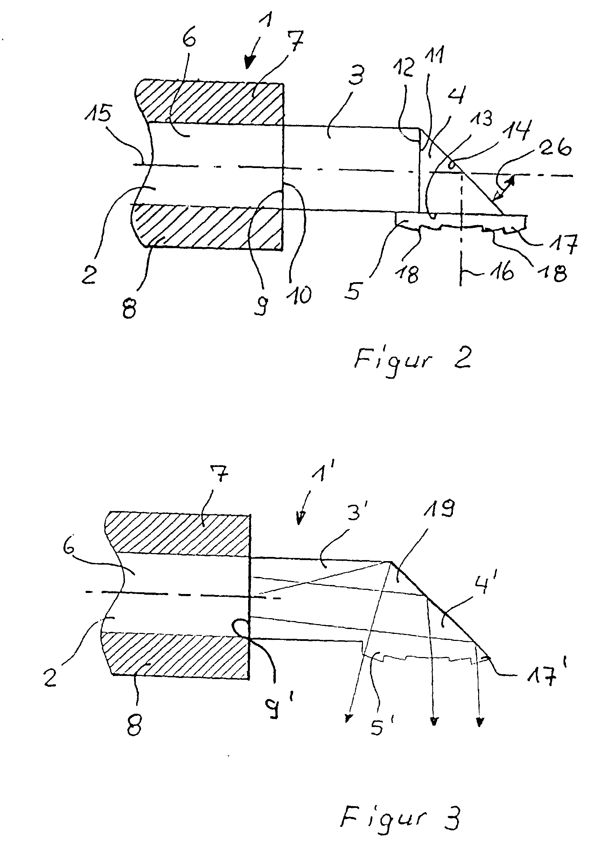

Nach einem ersten Ausführungsbeispiel gemäß Figur 2 ist das Lichtleitelement (3) mit seiner Lichteintrittsfläche (9) der Lichtaustrittsfläche (10) des freien Endes (7) des Lichtleiters (2) benachbart. Die Größe der Lichteintrittsfläche (9) ist an die Größe der Lichtaustrittsfläche (10) angepaßt. Das Lichtleitelement (3) ist an seiner der Lichteintrittsfläche (9) abgewandten Austrittsfläche (11) mit der Lichteintrittsfläche (12) des Umlenkprismas (4) verbunden. Zwischen der Lichteintrittsfläche (12) und einer Lichtaustrittsfläche (13) des Umlenkprismas (4) ist eine Reflexionsfläche (14) angeordnet. Die Reflexionsfläche (14) ist gegenüber der optischen Achse (15) um einen Neigungswinkel (26) von 45 Grad geneigt, so daß eine Umlenkung des aus dem Lichtleiter (2) austretenden Lichtes von 90 Grad erfolgt. Bei einer von 90 Grad abweichenden Umlenkung ist die Reflexionsfläche (14) entsprechend weniger bzw. stärker geneigt. Die Reflexionsfläche (14) weist an ihrer Rückseite eine Verspiegelung auf. An seiner Lichtaustrittsfläche (13) ist das Umlenkprisma (4) mit der Linse (5) verbunden. Lichtaustrittsfläche (4) und Linse (5) sind so angeordnet, daß die an der Reflexionsfläche (14) gespiegelte optische Achse (15) mit der optischen Achse (16) der Linse (5) zusammenfällt. Die Linse (5) ist als Fresnellinse (17) ausgebildet. Die Fresnellinse (17) weist an ihrer dem Umlenkprisma (4) abgewandten Außenseite Außenprismen (18) auf.

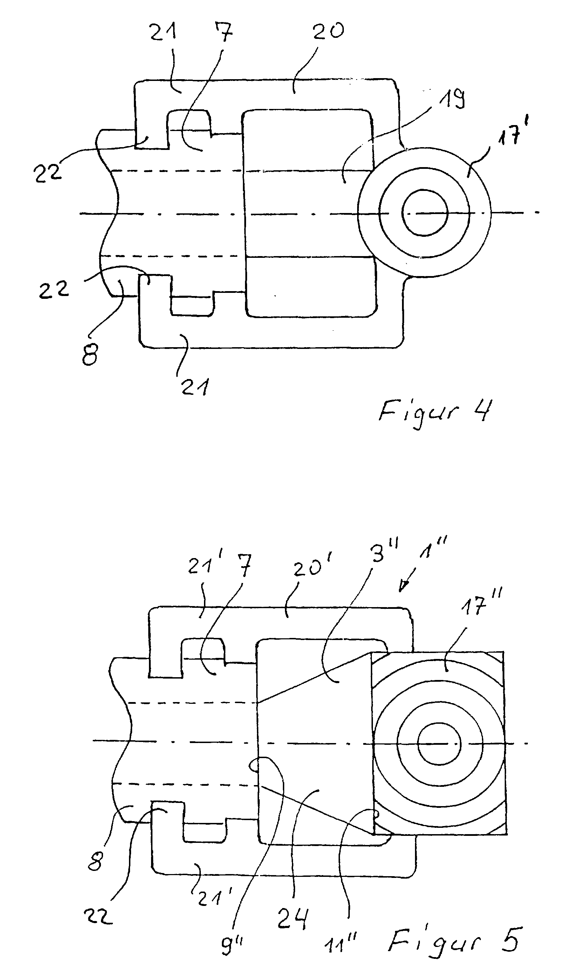

Nach einem zweiten Ausführungsbeispiel gemäß Figur 3 und Figur 4 bilden ein Lichtleitelement (3'), ein Umlenkprisma (4') und eine Linse (5') zusammen ein einteiliges Umlenkelement (19). Das Umlenkelement (19) weist eine Aufnahme (20) für die Lichtleiterendhülse (8) auf. Die Aufnahme (20) wird von zwei einander gegenüberliegenden Rastteilen (21) mit Rastnasen (22), die in entsprechende Ausformungen der Lichtleiterendhülse (8) einrasten, gebildet. Es ist aber auch möglich, auf eine Aufnahme (20) zu verzichten und das Umlenkelement (19) mit seiner Lichteintrittsfläche (9') an der Lichtaustrittsfläche (10) des Lichtleiters (2) festzukleben.

Nach einem weiteren Ausführungsbeispiel gemäß Figur 5 kann das Lichtleitelement (3") als Querschnittswandler (24) ausgebildet sein. Die Eintrittsfläche (9") des Querschnittswandlers (24) ist in ihrer Größe an die runde Lichtaustrittsfläche (10) des Lichtleiters (2) angepaßt, während die Austrittsfläche (11") eine rechteckige Form aufweist, so daß nach der Projektion ein rechteckiges Feld ausgeleuchtet wird. Die Fresnellinse (17'') ist dabei quer zu ihrer optischen Achse ebenfalls rechteckig ausgebildet.

Nach einem erfindungsgemäßen Beispiel weist das Glasfaserbündel (6) einen Durchmesser von 4 mm und die Lichteiterendhülse (8) einen Durchmesser von 8 mm auf. Das Lichtleitelement (3) weist einen Durchmesser von 4 mm auf. Das Lichtleitelement (3) und das Umlenkprisma (4) weisen eine Gesamtlänge von 11 mm auf. Der Durchmesser der Fresnellinse (17) beträgt 12 mm. Die Brennweite der Fresnellinse (17) beträgt 10 mm. Die genannten Abmessungen sind nur beispielhaft und können in Abhängigkeit von den Randbedingungen, wie Einbautiefe, Ort der Plazierung der Leuchte, auszuleuchtende Fläche etc. verändert werden. Insbesondere durch die Wahl der Fresnellinse (20) und ihrer Brennweite kann die zu beleuchtende Fläche sowohl scharfkantig als auch mit weich auslaufenden Grenzen ausgeleuchtet werden.

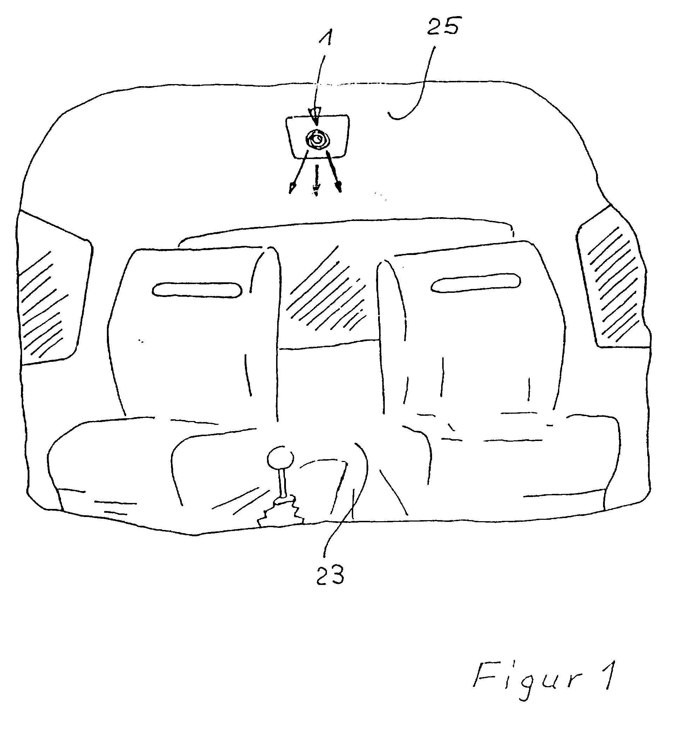

Die Leseleuchte (1,1',1'') ist, wie aus Figur 1 zu ersehen ist, in einem flachen Fahrzeughimmel (25) des Fahrzeuginnenraumes (23) eingebaut.

Das Licht aus der nicht dargestellten Lichtquelle wird in den Lichtleiter (2) eingespiegelt und von dem Glasfaserbündel (6) zum freien Ende (7) des Lichtleiters (2) und weiter über das Lichtleitelement (3,3',3") zum Umlenkprisma (4,4') geleitet. An der Reflexionsfäche (14) des Umlenkprismas (4,4') wird das Licht zur Fresnellinse (17,17',17") umgelenkt. Von der Fresnellinse (17,17',17") wird das Licht in den Innenraum (23) projiziert.

## Patentansprüche

1. Leseleuchte, insbesondere zum Einbau in einen Fahrzeughimmel mit einem Lichtleiter (2), mit einem Umlenkprisma (4, 4'), mit einer Lichteintrittsfläche (12), mit einer Reflexionsfläche (14) und mit einer Lichtaustrittsfläche (10), die mit einer nachgeordneten Linse verbunden ist, **dadurch gekennzeichnet, dass** zwischen einer Lichtaustrittsfläche (10) eines freien Endes (7) des Lichtleiters (2) und der Lichteintrittsfläche (12) des Umlenkprismas (4, 4') ein Lichtleitelement (3, 3', 3") angeordnet ist, dessen Eintrittsfläche (9, 9', 9") an der Lichtaustrittsfläche (10) des Lichtleiters (2) anliegt und dessen der Eintrittsfläche (9, 9', 9") abgewandte Austrittsfläche (11, 11") mit der Lichteintrittsfläche (12) des Umlenkprismas (4) verbunden ist, dass das Lichtleitelement (3'), das Umlenkprisma (4') und die Linse (5') als einteiliges Umlenkelement (19) ausgebildet sind, dass das Umlenkelement (19) eine Aufnahme (20, 20') aufweist, mit der es mit dem freien Ende (7) des Lichtleiters (2) verbunden ist, dass die Aufnahme (20, 20') mindestens ein Rastteil (21, 21') mit einer Rastnase (22) aufweist, das über eine entsprechend geformte Lichterendhülse (8) des freien Endes (7) einrastend gesteckt ist.

2. Leseleuchte nach Anspruch 1, **dadurch gekennzeichnet, dass** die optische Achse (16) der Linse (5, 5') mit der an der Reflexionsfläche (14) gespiegelten optischen Achse (15) des Lichtleiters (2) zusammenfällt.

3. Leseleuchte nach Anspruch 1 oder 2, **dadurch gekennzeichnet, dass** die Linse (5, 5') als Fresnellinse (17, 17', 17") ausgebildet ist.

4. Leseleuchte nach einem der Ansprüche 1 bis 3, **dadurch gekennzeichnet, dass** das Umlenkelement (19) aus hochtransparentem Kunststoff ausgebildet ist.

5. Leseleuchte nach einem der Ansprüche 1 bis 4, **dadurch gekennzeichnet, dass** das Lichtleitelement (3") als Querschnittswandler (24) ausgebildet ist.

6. Leseleuchte nach Anspruch 5, **dadurch gekennzeichnet, dass** der Querschnittswandler (24) an seiner Eintrittsfläche (9") einen der Lichtaustrittsfläche (10) des Lichtleiters (2) angepassten runden Querschnitt und an seiner Austrittsfläche (11") einen der Form der auszuleuchtenden Fläche angepassten Querschnitt aufweist.

7. Leseleuchte nach einem der Ansprüche 1 bis 6, **dadurch gekennzeichnet, dass** das Umlenkelement (19) mit seiner Eintrittsfläche (9') gegen die Lichtaustrittsfläche (10) des Lichtleiters (2) geklebt ist.

## Claims

1. Reading light, particularly for installation in a vehicle roof, having a light guide (2), a reflecting prism (4, 4') with a light entry surface (12), a reflecting surface (14) and a light outlet surface (10) connected to a subsequent lens, **characterised in that** between a light outlet surface (10) of a free end (7) of the light guide (2) and the light entry surface (12) of the reflecting prism (4, 4') is arranged a light guide element (3, 3', 3'') whose entry surface (9, 9', 9'') lies on the light outlet surface (10) of the light guide (2) and whose outlet surface (11, 11'') facing away from the entry surface (9, 9', 9'') is connected to the light entry surface (12) of the reflecting prism (4), that the light guide element (3'), the reflecting prism (4') and the lens (5') are designed as a single-part deflection element (19), that the deflection element (19) has a seating (20, 20') with which it is linked to the free end (7) of the light guide (2), that the seating (20, 20') has at least one latching part (21, 21') with a latching catch (22), which is inserted in latching fashion via a suitably shaped light source end sleeve (8) of the free end (7).

2. Reading light according to Claim 1, **characterised in that** the optical axis (16) of the lens (5, 5') coincides with the optical axis (15) of the light guide (2) reflected from the reflecting surface (14).

3. Reading light according to Claim 1 or 2, **characterised in that** the lens (5, 5') is designed as a Fresnel lens (17, 17', 17'').

4. Reading light according to one of the claims 1 to 3, **characterised in that** the deflection element (19) is made from highly transparent plastics material.

5. Reading light according to one of the claims 1 to 4, **characterised in that** the light guide element (3'') is designed as a cross-section converter (24).

6. Reading light according to Claim 5, **characterised in that** the cross-section converter (24) has at its entry surface (9'') a round cross-section adapted to the light output surface (10) of the light guide (2) and at its exit surface (11'') a cross-section adapted to the shape of the surface to be illuminated.

7. Reading light according to one of the claims 1 to 6, **characterised in that** the deflection element (19) is cemented with its entry surface (9') against the light output surface (10) of the light guide (2).

## Revendications

1. Lampe de lecture, en particulier destinée à être montée dans le ciel d'un véhicule, comprenant un guide de lumière (2), un prisme de déviation (4, 4'), une surface d'entrée de lumière (12), une surface de réflexion (14) et une surface de sortie de lumière (10) qui est reliée à une lentille montée en aval, **caractérisée en ce que** entre une surface de sortie de lumière (10) d'une extrémité libre (7) du guide lumière (2) et la surface d'entrée de lumière (12) du prisme de déviation (4, 4') est agencé un élément de guidage de lumière (3, 3', 3") dont la surface d'entrée (9, 9', 9") est en contact sur la surface de sortie de lumière (10) du guide de lumière (2) et dont la surface de sortie (11, 11") détournée de la surface d'entrée (9, 9', 9") est reliée à la surface d'entrée de lumière (12) du prisme de déviation (4), **en ce que** l'élément de guidage de lumière (3'), le prisme de déviation (4') et la lentille (5') sont réalisés sous forme d'élément de déviation (19) d'un seul tenant, **en ce que** l'élément de déviation (19) présente un logement (20, 20') par lequel il est relié avec l'extrémité libre (7) du guide de lumière (2), **en ce que** le logement (20, 20') présente au moins une pièce d'enclenchement (21, 21') avec un ergot d'enclenchement (22) qui est enfiché par enclenchement via une douille d'extrémité de guide de lumière (8) formée de manière correspondante à l'extrémité libre (7).

2. Lampe de lecture selon la revendication 1, **caractérisée en ce que** l'axe optique (16) de la lentille (5, 5') coïncide avec l'axe optique (15) du guide de lumière (2), qui est réfléchi sur la surface de réflexion (14).

3. Lampe de lecture selon l'une ou l'autre des revendications 1 et 2, **caractérisée en ce que** la lentille (5, 5') est réalisée sous forme de lentille de Fresnel (17, 17', 17").

4. Lampe de lecture selon l'une des revendications 1 à 3, **caractérisée en ce que** l'élément de déviation (19) est réalisé en matière plastique hautement transparente.

5. Lampe de lecture selon l'une des revendications 1 à 4, **caractérisée en ce que** l'élément de guidage de lumière (3") est réalisé sous forme de transformateur de section transversale (24).

6. Lampe de lecture selon la revendication 5, **caractérisée en ce que** le transformateur de section transversale (24) présente à sa surface d'entrée (9") une section transversale ronde adaptée à la surface de sortie de lumière (10) du guide de lumière (2) et à sa surface de sortie (11") une section transversale adaptée à la forme de la surface à éclairer.

7. Lampe de lecture selon l'une des revendications 1 à 6, **caractérisée en ce que** l'élément de déviation (19) est collé avec sa surface d'entrée (9') contre la surface de sortie de lumière (10) du guide de lumière (2).
